# EUROPEAN PATENT APPLICATION

(11) **EP 2 575 370 A1**
(43) Date of publication of application: **03.04.2013**
(21) Application number: 11306237.6
(22) Date of filing: 28.09.2011
(51) Int. Cl.: H04N 17/00

(54) **A system for testing a device comprising a hdmi transmitter**

(71) Applicant: ST-Ericsson SA, 1228 Plan-les-Ouates (CH)
(72) Inventor: Claramond, Laurent, 38130 Echirolles (FR); Ritala, Pertti, 24280 Salo (FI); Belet, Christophe, 72250 Parigne Leveque (FR)
(74) Representative: Hirsch & Associés

(57) **Abstract**

It is proposed a system (32) for testing a device comprising a HDMI transmitter delivering out output signals and being able to operate in a test mode, the system (32) comprising:
- an HDMI test unit (34) different from the device to be tested which is able to carry out measurements on the output signals of the device to be tested and has a controller interface (38) controlling the measurements, the controller interface (38) being adapted to be controlled by the device when the device operates in test mode.

It is also proposed a method of using the HDMI test unit of such system.

The system enables to test a device comprising a HDMI transmitter in a faster way.

## Description

### FIELD OF THE INVENTION

The invention relates to the field of testing components, and especially to a system for testing a device comprising a HDMI transmitter and a method of testing using the HDMI test unit of such system.

### BACKGROUND OF THE INVENTION

Electronic device manufacturers perform production tests to ensure that any features on product, such as electronic components or housing, works properly after the components are assembled.

Such tests also concern product supporting a High Definition Multimedia Interface (also named after its acronym HDMI) transmitter. The source may be a HDMI transmitter or HDMI output. High-Definition Multimedia Interface (HDMI) is a compact audio/video interface for transmitting uncompressed digital data. It is a digital alternative to consumer analog standards, such as radio frequency (also named after its acronym RF) coaxial cable or composite video. HDMI connects digital audio/video sources (such as set-top boxes, DVD players, HD DVD players, Blu-ray Disc players, personal computers, video game consoles such as the PlayStation 3 and Xbox 360, and AV receivers) to compatible digital audio devices, computer monitors, video projectors, tablet computers, and digital televisions.

HDMI implements the EIA/CEA-861 standards, which define video formats and waveforms, transport of compressed, uncompressed, and LPCM audio, auxiliary data, and implementations of the VESA EDID. HDMI supports, on a single cable, any uncompressed video format, including standard, enhanced, high definition and 3D video signals; up to 8 channels of compressed or uncompressed digital audio; a Consumer Electronics Control (CEC) connection; and an Ethernet data connection.

In the case of product comprising a HDMI transmitter, it is desirable to test that all HDMI output channels are working properly.

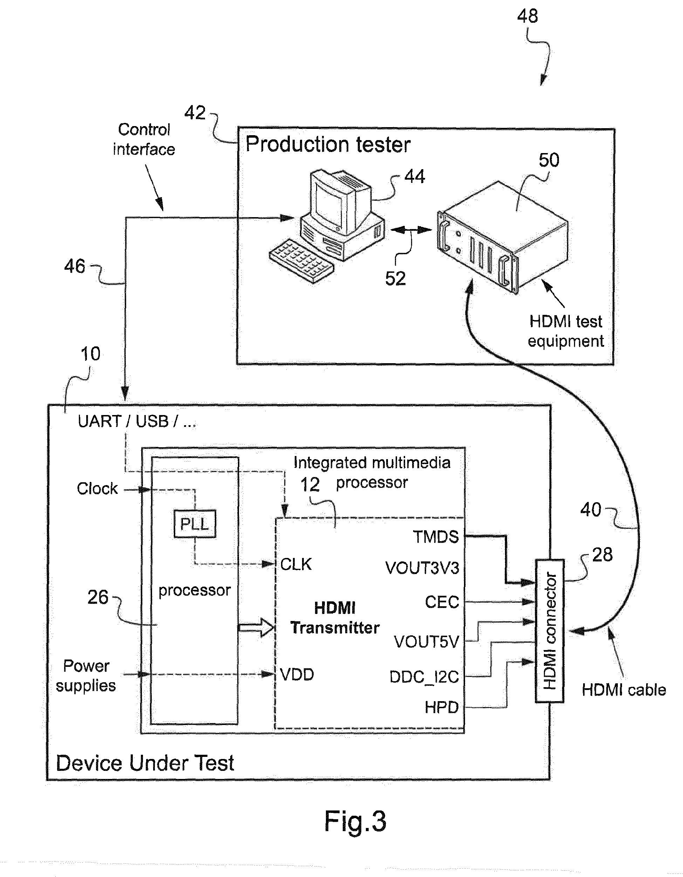

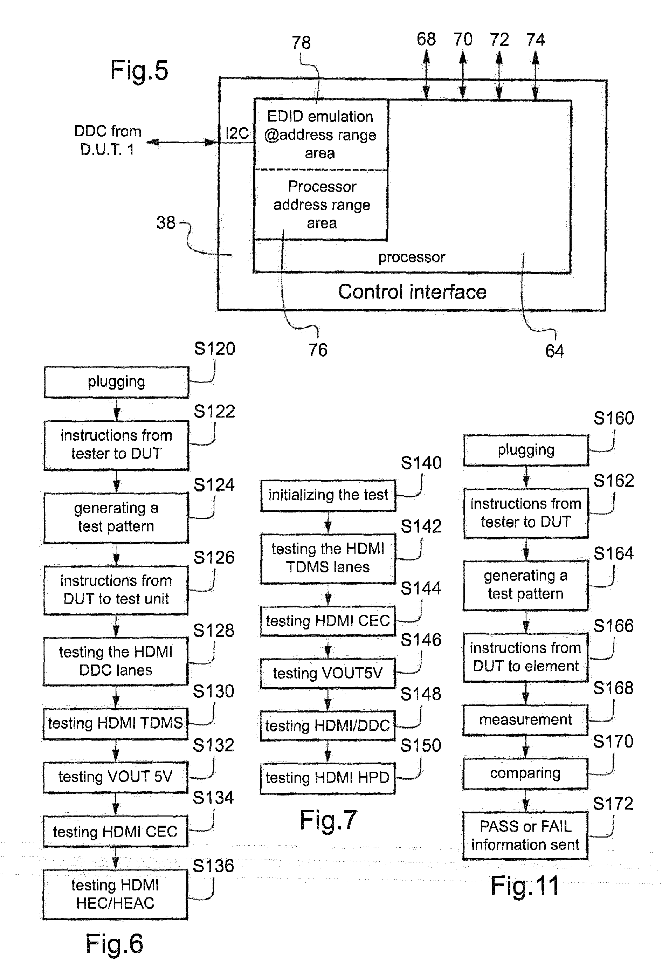

Prior art for testing HDMI interface in device production generally belongs to the kind of test which is known as "functional testing". In contrast with "self-testing" or built-in self test (also named after its acronym BIST), external dedicated HDMI test equipments have to be connected to the device to be tested, a test sequence being run by a tester. The external equipments are able to perform measurements or to generate stimuli from and/or to the device to be tested. An example of such embodiment is further describes below in reference to Figure 3 and Figure 7.

Such way of testing HDMI interface is time consuming. Indeed, in device production, the time spent for functional test mechanism is ten times bigger than the time spent for a built-in self test. This longer test duration can be explained by the fact that, for testing an interface, the tester performs at least two requests. The first request is sent to the device to be tested to enable functionality. For instance, it may consist in sending data test pattern on a specific output channel of the device to be tested. The second request is sent to the test equipment so that the test equipment performs measurement and waits for the result.

Furthermore, dedicated test equipments have to be used to test the HDMI signals delivered by the device. Digital video analyser may, for instance, be used. Such equipment is expensive. Extra equipments for testing the rest of the device are also used.

### SUMMARY OF THE INVENTION

An object of embodiments of the present invention is to alleviate at least partly the above mentioned drawbacks. More particularly, embodiments of the invention aim at providing a system enabling to test a device comprising a HDMI transmitter more rapidly.

This object is achieved with a system for testing a device comprising a HDMI transmitter delivering out output signals and being able to operate in a test mode, the system comprising an HDMI test unit different from the device to be tested which is able to carry out measurements on the output signals of the device to be tested and has a controller interface controlling the measurements, the controller interface being adapted to be controlled by the device when the device operates in test mode.

Preferred embodiments comprise one or more of the following features:
- the system further comprise a HDMI cable, the HDMI cable ensuring a HDMI link between the device to be tested and the HDMI test unit.
- the HDMI test unit further comprises a man machine interface able to launch the test and display the results of the test.
- the system further comprises a tester for commanding the device to be tested.
- the tester and the device to be tested are connected by an UART link or a USB link, the tester being adapted to send instructions to the device to be tested to execute a testing sequence.
- the tester is adapted to test that the device is able to deliver signals.
- the device to be tested is able to deliver a signal chosen in the group consisting of:
   - Transition Minimized Differential Signaling (TMDS) data and clock lanes,
   - TMDS data and clock shields,
   - Consumer Electronics Control (CEC),
   - Display Data Channel (DDC),
   - Hot Plug Detect (HPD).
- the device to be tested is able to deliver signals exhibiting known values for at least one electrical property, the tester is adapted to check the conformity between the measured values for the electrical property of the signals delivered by the device to be tested with the known values.
- the HDMI test unit is adapted to carry out measurement in an independent way.
- the HDMI test unit is a passive unit.
- the control interface is adapted to receive control instructions from the device to be tested in the I2C protocol.

It is also proposed a method of testing a device comprising a HDMI transmitter delivering out output signals and being able to operate in a test mode by using a HDMI test unit of a system for testing such device, the system comprising the HDMI test unit which is different from the device to be tested and is able to carry out measurements on the output signals of the device to be tested and has a controller interface controlling the measurements, the controller interface being adapted to be controlled by the device when the device operates in test mode.

Preferred embodiments comprise one or more of the following features:
- the HDMI test unit is the HDMI test unit of a system as previously described.
- the method comprises the steps of:
   - plugging the HDMI test unit to the device to be tested,
   - receiving at the HDMI test unit a command signal from the device to be tested, the command signal corresponding to an instruction to begin the test.
- the method further comprises the steps of:
   - measuring a test pattern at the HDMI test unit, the test pattern being received from on at least one output of the DUT.

Further features and advantages of embodiments of the invention will appear from the following description of some embodiments of the invention, given as nonlimiting examples, with reference to the accompanying drawings listed hereunder.

### BRIEF DESCRIPTION OF THE DRAWINGS

Fig. 1 shows an example of device to be tested comprising a HDMI transmitter;
Fig. 2 shows a schematic representation illustrating an exemplary configuration of a system for testing a device comprising a HDMI transmitter, in accordance with an embodiment of the invention;
Fig. 3 shows a schematic representation illustrating an exemplary configuration of a system for testing a device comprising a HDMI transmitter, in accordance with prior art;
Fig. 4 shows a schematic representation illustrating an exemplary configuration of a system for testing a device comprising a HDMI transmitter, in accordance with an embodiment of the invention;
Fig. 5 shows a view of an example of embodiment of control interface;
Fig. 6 shows a flowchart of a method for testing a device comprising a HDMI transmitter, in accordance with an embodiment of the invention; and
Fig. 7 shows a flowchart of a method for testing a device comprising a HDMI transmitter, in accordance with prior art.
Fig. 8 shows a schematic representation illustrating an exemplary configuration of a system for testing a device comprising a HDMI transmitter, in accordance with an embodiment of the invention;
Fig. 9 shows a schematic view of an example of measurement circuitry of HDMI test unit;
Fig. 10 shows a schematic view of an example of measurement circuitry of HDMI test unit;
Fig. 11 shows a flowchart of a method for testing a device comprising a HDMI transmitter, in accordance with an embodiment of the invention.

### DETAILED DESCRIPTION OF THE INVENTION

Carrying out test without using the expensive dedicated test equipments used to test the HDMI signals delivered by a device to be tested as in the prior art is desirable. Indeed, it is expected to result in easier test architecture, fastest test and cheapest test equipments.

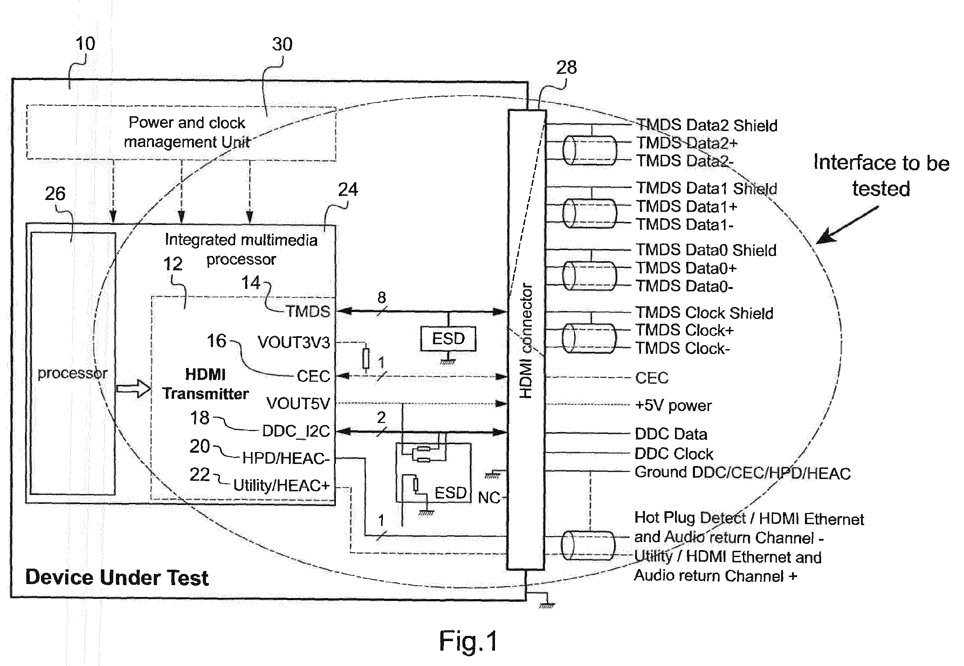

It is, thus, proposed a system for testing a device comprising a HDMI transmitter delivering out output signals. The device to be tested is also named device under test and often labeled after its acronym DUT. An example of device to be tested 10 is shown on Figure 1. The DUT 10 comprises a HDMI transmitter 12. A HDMI transmitter 12 is a high frequency digital interface composed of differential lanes which are labelled 14, 16, 18, 20 and 22. Therefore, the device to be tested 10 is able to deliver signals and notably HDMI signals. According to the example of Figure 1, the device to be tested 10 is able to deliver several lanes which are labeled TMDS for Transition Minimized Differential Signaling and clock lanes (lane 14), CEC for Consumer Electronics Control (lane 16), VOUT3V3 which provides a 3.3V signal on the CEC line, DDC for Display Data Channel (lane 18), VOUT5V which provides a 5V signal, HPD for Hot Plug Detect (lane 20) and HEAC for HDMI Ethernet and Audio Return Channel (lane 22). The channels delivering TMDS data, clock lanes, clock shields, CEC, DDC, HEAC (also labeled Utility/HEAC+) or HPD (also labeled HDP/HEAC-) are HDMI output channels. In addition, it can be noticed that CEC and HEAC signals are optional signals lane. On Figure 1, this is shown by the fact that the lanes CEC and HEAC are schematized with broken lines whereas the other lanes are schematized in full lines. Although as an example, the HDMI version described in High Definition Multimedia Interface specification Version 1.4a (HDMI Licensing, LLC) is considered below, it should be understood that any HDMI version may be used by the DUT.

According to the example of Figure 1, DUT 10 further comprises an integrated multimedia processor 24 which includes a processor 26 and HDMI transmitter 16. This latter is under the control of processor 26. The output lanes of HDMI transmitter 16 are linked either directly or indirectly via a circuitry to a HDMI connector 28. Several lines are emitted from this HDMI connector 28, each line being linkable to an output lane of HDMI transmitter 12. More specifically, for the case of TDMS lane, a TDMS Data2 shield line, a TDMS Data2+ line, a TDMS Data2- line, a TDMS Data1 shield line, a TDMS Data1+ line, a TDMS Data1- line, a TDMS Data0 shield line, a TDMS Data0+ line, a TDMS Data0- line, a TDMS Clock Shield line, a TDMS Clock+ line and a TDMS Clock - line are emitted. For the case of CEC lane, a CEC line and a ground CEC line are emitted. For the case of DDC lane, a DDC data line, a DDC clock line and a ground DDC line are emitted. For the case of DDC lane, a DDC data line, a DDC clock line and a ground DDC line are emitted. For the case of HDP lane, a HDP line and a ground HDP line are emitted. For the case of HEAC lane, a HEAC line and a ground HEAC are emitted. In Figure 1, it can be noticed that ground DDC line, ground CEC line; ground HDP line and ground HEAC line are the same line.

In addition, the integrated multimedia processor 24 is linked to a power and clock management unit 30. This unit 30 is represented with broken lines as unit 30 may be situated in several places.

Device 10 of Figure 1 is able to operate in a test mode. A test mode should be understood as a mode in which test can be carried out on the device. This may correspond to the fact that the device is able to deliver specific patterns facilitating the test on each of its outputs

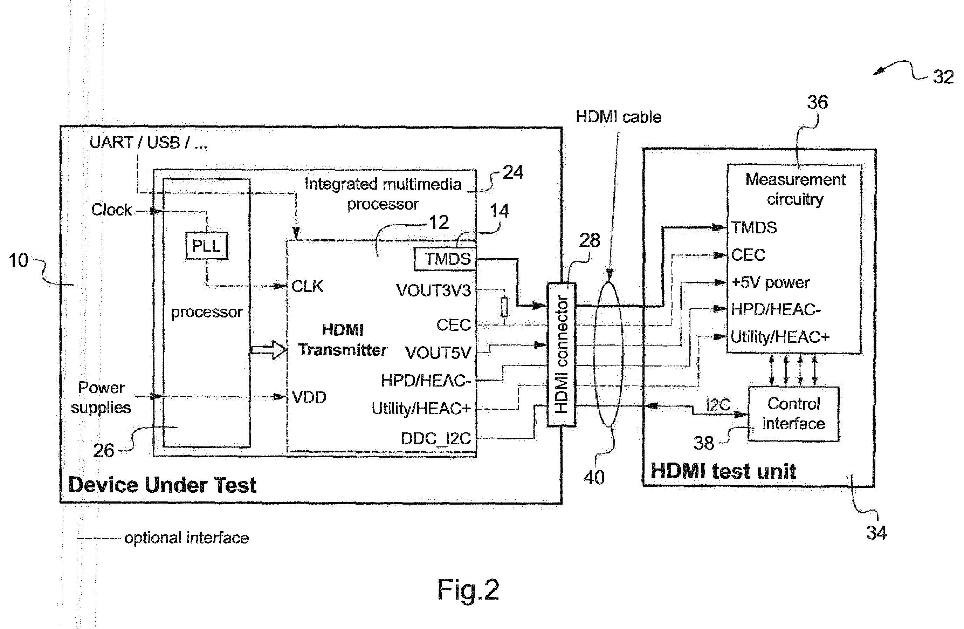

Figure 2 is a schematic representation of an example of system 32 which is used for testing the device to be tested 10.

The system 32 further comprises an HDMI test unit 34. HDMI test unit 34 is different from DUT 10. This means that HDMI test unit 34 is not included in DUT 10. In other words, DUT 10 and HDMI test unit 34 are two separate entities. This HDMI test unit 34 is able to carry out measurements on the output signals of the device to be tested 10. According to the embodiment of Figure 2, HDMI test unit 34 comprises a measurement circuitry 36 which allows testing HDMI TMDS, CEC, Vout5V, HPD and HEAC.

This HDMI test unit 34 further comprises a controller interface 38 triggering the measurements. This controller interface 34 is adapted to be controlled by the device when the device operates in test mode. Thus, in test mode, controller interface 34 is a slave-master relationship with the device to be tested 10, the device to be tested 10 being the master.

This system 32 provides more advantages than system 48 represented on Figure 3. Figure 3 is a schematic representation of a system 48 according to the prior art, system 48 being used for testing the device 10. Figure 3 corresponds to "functional testing" configuration. System 48 is similar to system 32, except that HDMI test unit 34 is not present whereas system 48 comprises an HDMI test equipment 50. Although only one test equipment 50 is represented in Figure 3, it should be understood that the system 48 may encompass several test equipments. The main issue with Figure 3 is the fact that the HDMI test equipment has to be synchronized with the element running the test. This is time consuming.

One solution to this problem could be to consider a Built In Self Test. But such configuration requires the modification of the hardware architecture of the HDMI source. Indeed, each DUT should comprise a unit to make the test.

Using system 34 enables to benefit from the advantage of system 48 and from a Built In Self Test without the disadvantages of each configuration. Indeed, no synchronization with the element running the test is required and no modification of the hardware architecture of the HDMI source is to be considered. In addition, same level of testing coverage can be obtained as when using test equipment 48 described before. System 32 therefore enables to obtain a reliable test of the device to be tested 10 with a test unit 34 which is faster than equipment 50 of the prior art. In other words, by using test unit 34, the test of the device to be tested 10 can be done in a more rapid way, while keeping the convenience of a "functional" test configuration. Indeed, the test unit 34 does neither require to be synchronized (as in a purely "functional" test illustrated on Figure 3) nor to be integrated in the device to be tested 10 (as in a purely BIST).

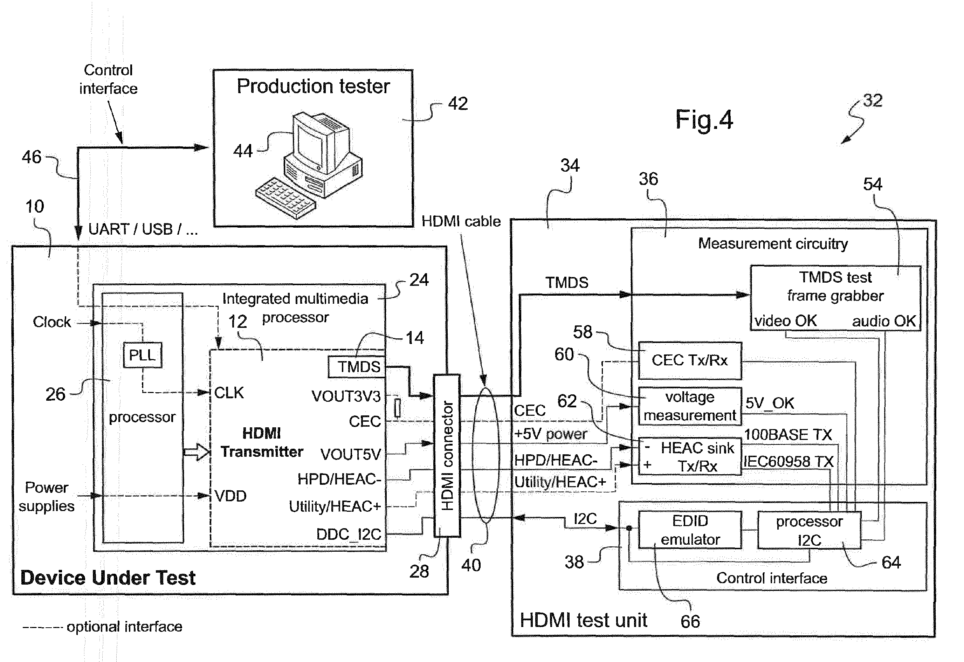

Measurement circuitry 36 may be further detailed by reference to the example of Figure 4 Figure 4 is a schematic representation illustrating an exemplary configuration of a system for testing a device comprising a HDMI transmitter. Measurement circuitry 36 may comprise a TMDS test frame grabber 54. Such block 54 enables to detect a valid video signal and a valid audio signal into a TMDS test pattern. Thus, the grabber 54 receives the TDMS signal delivered by the device 10. As shown schematically on Figure 4, the grabber 54 emits output signals towards control interface 38. These signals are "video OK" and "audio OK". In case these signals are in a state which corresponds to a "OK" state (for instance superior to a given voltage), it indicates to control interface 38 that the TDMS channels tested by the grabber 54 are valid.

Measurement circuitry 36 may further comprise a CEC receiver/transmitter block 58. Such block 58 enables both to receive frame emitted by HDMI transmitter 14 and to transmit frame to HDMI transmitter 12. Therefore, CEC receiver/transmitter block 58 complies with the requirements of the HDMI specification. Each frame received from HDMI transmitter 12 is acknowledged by CEC receiver/transmitter block 58 and transmitted to control interface 58. Control interface 58 is able to analyze the transmitted frame and identifies if it is a valid frame or not.

According to the example of Figure 4, measurement circuitry 36 further comprises a voltage measurement element 60. Such element 60 enables to check that a 5V voltage is delivered out from the output VOUT5V by HDMI transmitter 12. In case the voltage measured is in the range defined by HDMI specification, which means that the output VOUT5V is working properly, voltage measurement element 60 emits a 5VOK signal to control interface 38.

Measurement circuitry 36 may further comprise a HEAC sink Tx/Rx element 62. Such HEAC sink Tx/Rx element 62 enables to transmit and receive 100BaseTX frame (or MAC frame). In addition, HEAC sink Tx/Rx element 62 may also be able to transmit audio data stream as specified by HDMI specification. In case HDMI transmitter 12 does not support HEC or HEAC, this element 62 is used to control HPD signal by looping a constant power signal to HPD output between voltage measurement unit 60 and HEAC sink Tx/Rx element 62. For instance, such constant may be set to +5V. In addition, the feedback may be controlled by control interface 38.

Control interface 38 of HDMI test unit 34 may be as illustrated on Figure 4 or on Figure 5. Figure 5 corresponds to a view of an example of embodiment of control interface 38. In this figure, the interactions with measurement circuitry 34 via exchange of signals as previously described are symbolized by the arrows 68, 70, 72 and 74. Control interface 38 comprises a processor 64. Processor 64 is able to interact with HDMI transmitter 12. The control of control interface 38 by the device to be tested 10 may be achieved thanks to the I2C protocol. In such case, control interface 38 is adapted to receive control instructions from the device to be tested 10 in the I2C protocol. Processor 64 is also able to interact with measurement circuitry 38. This implies that the processor 64 is provided with the appropriate input/output interfaces to ensure such interaction.

Control interface 38 also comprises a EDID emulator 66. Extended display identification data (also named after its acronym EDID) is a data structure provided by a digital display to describe its capabilities to a video source (e.g. graphics card or set-top box). It is what enables a modern personal computer to know what kinds of monitors are connected to it. EDID is defined by a standard published by the Video Electronics Standards Association (also named after its acronym VESA). The EDID includes manufacturer name and serial number, product type, phosphor or filter type, timings supported by the display, display size, luminance data and (for digital displays only) pixel mapping data. The emulator 66 should support the HDMI specification. Notably, the content format should comply with the requirement of HDMI specification. Indeed, in that case, the content format could be modified by processor 64.

Alternatively, as it is illustrated on Figure 5, EDID emulation may be integrated into processor 64 of control interface 38. This enables to share the same address as required by HDMI specification for EDID for two applications. The same address may be used for both EDID emulation and control of the HDMI test unit. This can be done by reserving dedicated segment pointers for "processor address range" 76 as shown in Figure 5.

As in Figure 4, system 10 may further comprise a production tester 42. As illustrated in Figure 3, a production tester 42 in prior art comprises the HDMI test equipment 50 and a tester 44, tester 44 being in interface with processor 26 of the device to be tested 10. According to Figure 4, production tester 42 only comprises tester 44. Tester 44 should be understood as a unit which is able to put the device to be tested 10 in test mode. In other words, tester 42 is commanding to the device to be tested 10 to execute a testing sequence. For instance, tester 44 is adapted to send instructions to the device to be tested 10 to execute a testing sequence via a link symbolized by the "double arrow" 46 on Figure 4. This link between tester 41 and the device to be tested 10 may be a USB or an UART link. Such link is easy to implement. Furthermore, according to the example of Figure 4, tester 44 is a personal computer.

HDMI test unit 34 may be adapted to carry out measurement in an independent way. By this, it is meant that when HDMI test unit 34 has received an order to begin a measurement or series of measurements, HDMI test unit 34 is able to perform this measurement on its own without having to interact with other elements and notably receiving order from these elements.

According to an embodiment which is not represented, the use of tester 44 may be avoided. This is an alternative for testing HDMI source like a BIST without using a tester 44. In this generalized embodiment, DUT 10 fully manages HDMI test unit 34 by itself. In that case, either DUT 10 or HDMI test unit 34 is provided with a Man Machine Interface enabling to launch HDMI test sequence and to display test status. By launching the test, it is meant that upon entry of the user, the system begins a test resulting in HDMI test unit 34 carrying out measurements. For instance, DUT 10 may further comprise a display and keypad. User can then launch HDMI test sequence using keypad. DUT 10 manages full HDMI testing sequence with HDMI test unit 34 and then plot testing status is displayed on the display. The same may be considered for HDMI test unit 34, this HDMI test unit 34 being the ones of Figure 2, Figure 4 or Figure 8 (which is described below).

It is also proposed a method of testing the device to be tested 12 by using the system 10. Such method may be carried out as illustrated with the flowchart of Figure 6.

The method according to Figure 6 comprises a step S120 of plugging HDMI test unit 34 to the device to be tested 10. This plugging step S120 can be achieved by using HDMI cable 40.

The method also comprises a step S 122 of sending instructions from tester 44 to the device to be tested 10 to execute a testing sequence. This can be achieved by setting HDMI transmitter 12 in test mode. In such test mode, test patterns are notably generated on TMDS lanes, CEC and Vout5V. This can be fully managed by embedded software in the device to be tested 10.

The method may further comprise the step S124 of generating a test pattern on at least one output of the device to be tested 10.

According to the example of Figure 6, the method further comprises a step S126 of sending a command signal from the device to be tested 10 to HDMI test unit 34, the command signal corresponding to an instruction to begin the measurement. For instance, such step S126 may be achieved by sending a command in the I2C language from HDMI transmitter 12 to control interface 38 to start measurement.

The method may further comprise the step S128 of measuring the test pattern at HDMI test unit 34. Upon receiving command of control interface 34, the measurement may for instance be performed by testing HDMI interface 34.

According to the example of Figure 6, the method further comprises a step S128 of measuring the DDC channels. As device 10 is in test mode, it makes query through DDC interface to control interface 38 of HDMI test unit 34 to read EDID emulator content 78 to identify capability of HDMI test unit 34. If HDMI transmitter 12 does not receive EDID content 78 if control interface 38 does not acknowledge I2C access, processor 64 should return "HDMI fail status" to tester 44 through link 46; meaning there is issue on HDMI interface. In this case, the test could end.

Alternatively, DUT 10 could enter in test mode automatically when it detects a HDMI test unit 34 presence. This can be done during this sequence when HDMI transmitter 12 is discovering the HDMI test unit capability with DDC by trying to query the processor 64 (if the processor 64 is answering, a HDMI test unit 34 is plugged); by reading dedicated part of EDID 66 where HDMI test unit 34 presence is detectable.

The method may further comprise a step S130 of testing TMDS channels. In this step S130, processor 26 initializes HDMI transmitter 12 and TMDS block 14 to start TMDS video and audio predefined test pattern. Predefined test pattern is chosen according to step S128 and according to the EDID content 78. Processor 26 requests HDMI transmitter 12 to query control interface 28 (through DDC) to start TMDS measurements. Processor 64 waits for TMDS test frame grabber 54 measurements. In parallel, the HDMI transmitter should pull periodically the HDMI test unit processor 64 to get TMDS measurement status. Processor 64 returns back TMDS measurement status to DUT 10. 1 through DDC. Processor 26 manages TMDS measurement acceptance criteria. The acceptance criteria in this case is the following: if measurement status from HDMI test unit 34 is not OK, processor 26 should return "HDMI fail status" to tester 44 through link 46; meaning there is issue on HDMI interface. In this case, the test could end.

The method may further comprise a step S132 of testing the VOUT5V. This step is not detailed since it is similar to the previous ones.

The method may optionally comprise a step S 134 of testing HDMI CEC channel. Such step S 134 may be achieved in the following way. Processor 26 should requests HDMI transmitter 12 to broadcast a "Report Physical Address" through CEC to HDMI test unit 36. CEC receiver/transmitter block 58 will receive the message and transfer it to processor 64. HDMI transmitter 12 should request HDMI test unit processor 64 to get back the broadcasted message through DDC interface. If the physical address sent corresponds to physical address read back, CEC test interface succeeds. Otherwise, DUT 10 should return error message to tester 44 (end of test).

The method may optionally comprise a step S136 of testing HDMI HEC / HEAC channel. Such step S 134 may be achieved in the following way. Processor 26 should requests HDMI transmitter 12 to send a MAC frame with any content to HDMI test unit 34. HEAC sink Tx/Rx 62 receives MAC frame and forwards it to processor 64. Processor 64 could check frame integrity. For instance, the frame integrity can be checked by checking the Frame Check Sequence (FCS) of the MAC frame. HDMI transmitter 12 should request HDMI test unit 34 to get back, via DDC, the MAC frame or to request integrity status of the MAC frame sent. Processor 64 sends back the MAC frame or sends MAC frame integrity status to HDMI transmitter 12. The acceptance criteria in this case is the following: if received back MAC frame or if MAC frame integrity status is not OK, processor 26 should return an error message to tester 44 through link 46; meaning there is issue on HDMI interface. In this case, the test could end.

This sequence described upon is just provided as example to describe an example of method, be it understood that testing sequence may be different. The method according to Figure 6 provides more advantages than the method according to the flowchart of Figure 7, this method being a prior art method.

According to Figure 7, the method comprises a step S 140 of initializing the test. This step S 140 of initializing may be achieved by sending a command from tester 44 to the device to be tested 10 to initialize HDMI transmitter 12. HDMI transmitter 12 may for instance be initialized if the output Vout5V is enabled.

The method further comprises a step S 142 of testing the HDMI TDMS lanes of the device to be tested 10. During this step S142 of testing the HDMI TDMS lanes, tester 44 sends a command the device to be tested 10 to set HDMI transmitter 12 to generate known data test pattern at the TMDS lanes. Example of data pattern generated may be video and audio pattern in HDMI format. Then, tester 44 sends a command to HDMI test equipment 50 to check data test pattern emitted by HDMI transmitter 12. Afterwards, HDMI test equipment 50 sends result to tester 44. Then, tester 44 manages acceptance criteria. In other words, it is determined if the test is passed or failed.

The method further comprises a step S 144 of testing the HDMI CEC interface of the device to be tested 10. Similar operations to step S144 are achieved during this step S 144, the only difference being that instead of a known data test pattern, it is a message which is sent.

The method further comprises a step S146 of testing the Vout5V generation of the device to be tested 10. During this step S146 of testing the Vout5V generation, tester 44 sends a command the device to be tested 10 to check 5V presence on Vout5V signal. Afterwards, HDMI test equipment 50 sends result to tester 44. Then, tester 44 manages acceptance criteria. In other words, it is determined if the test is passed or failed.

The method further comprises a step S 148 of testing the HDMI DDC interface of the device to be tested 10. Similar operations to step S144 of testing the HDMI CEC interface of the device to be tested 10 are achieved during this step S148 of testing the HDMI DDC interface.

The method further comprises a step S150 of testing the HPD signal of the device to be tested 10. During this step S150 of testing the HPD signal, tester 44 sends a command the device to be tested 10 to read HPD status in HDMI transmitter 12. Afterwards, HDMI test equipment 50 sends HPD status to tester 44. Then, tester 44 manages acceptance criteria. In other words, it is determined if the test is passed or failed.

With the example of the method according to Figure 7, the HDMI interface functional test is performed in a sequence of six steps, be it understood that some of these steps can be performed in parallel.

Therefore, it appears that the method according to the flowchart of Figure 6 enables to benefit from the advantages provided by the use of system 32. This means that the method according to the flowchart of Figure 6 is faster than the method according the flowchart of Figure 7 without loosing in reliability of the test or making the set up for the test more complex.

One other idea of the present invention relies on the fact that production test does not aim to test HDMI compliancy. Indeed, a production test is meant to check that the product is working. Thus, production test aims to test components assembly, that is, the interconnections between integrated components with other ones or with external interfaces like connectors. This implies that production test does not aim to repeat the HDMI compliancy tests which were done during the development of the product before, notably at the research and development time of the product. It is also not considered to redo the testing of integrated components.

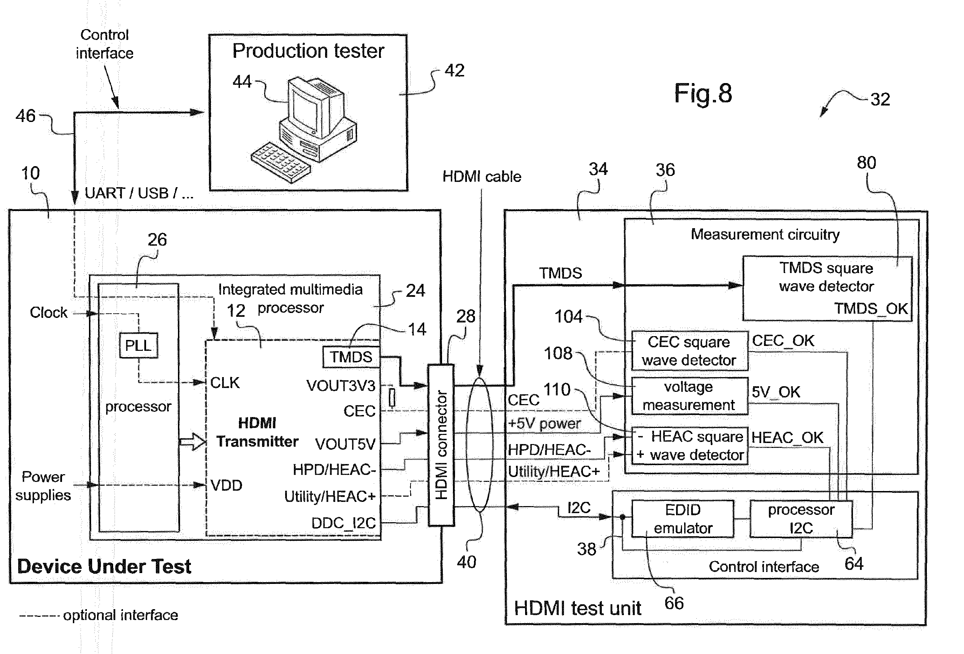

It is, thus, proposed a system for testing a device comprising a HDMI transmitter delivering out output signals as illustrated on Figure 8. System 32 of Figure 8 should be compared with system 32 of Figure 4. They differ in that, in the case of Figure 8, the elements of measurement circuitry 36 in the HDMI test unit 34 are simplified. This may also be expressed as the fact that measurement circuitry 36 in the HDMI test unit 34 is a passive one. It should be understood that a passive unit only comprises the most basic components. Resistors, capacitors or inductors are examples of such basic components.

In other words, it is proposed a system 32 providing a Built In Self test without its constraints and enabling to use low cost measurement circuitry and to ease measurements mechanisms. This system 32 provides simplicity and low cost. Indeed, simplicity to build the software test sequence on DUT side as simple test pattern could be used for testing HDMI interfaces without need to manage protocol / signalling.

As explained before, a production test is only meant to check that the product is working. Therefore, tester 44 may be adapted to test that device 10 is able to deliver signals. Indeed, if it has been checked that device 10 delivers a signal, it is likely that such test is sufficient to assert that device 10 is operating in a valid way. Such test is the simplest to implement. Thus, it is the quickest to carry out.

However, tester 10 may be able to carry out more refined tests. This is notably the case if the device to be tested 10 is able to deliver signals exhibiting known values for at least one electrical property. For instance, the electrical property may be intensity or voltage. It may be considered that the tester 16 be adapted to check the conformity between the measured values for the electrical property of the signals delivered by the device to be tested 10 with the known values. This enables to detect cases when, although the device to be tested 10 is able to deliver signals, the device to be tested 10 is not operating in good conditions.

As a specificity of system 32 of Figure 8 is the components used in measurement circuitry 36, it will now be focused on the electrical architecture of the HDMI test unit 34.

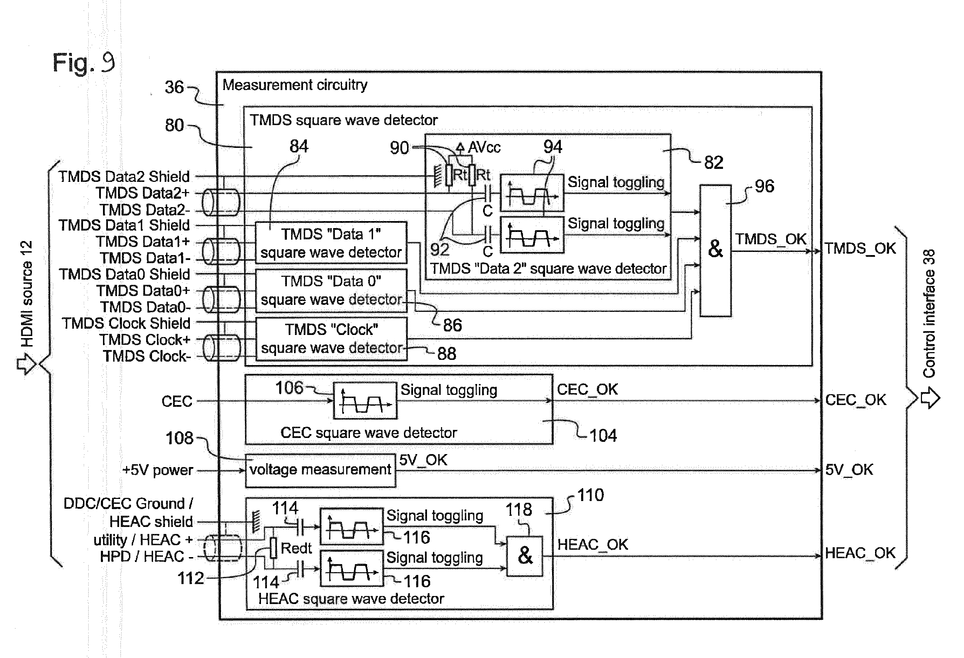

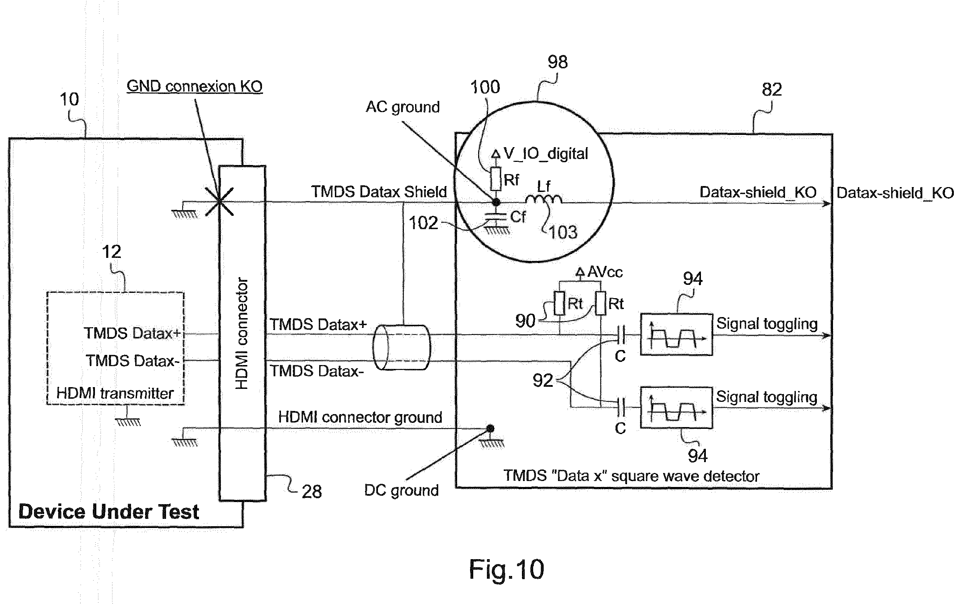

In the case of Figure 8, measurement circuitry 36 of HDMI test unit 34 comprises a TMDS square wave detector 30 that allows detecting the presence of a signal or a carrier on each TMDS lines transmitted by HDMI transmitter 12. Such detector 80 may be realized in different ways. Two alternatives are illustrated by reference to Figures 9 and 10.

Figure 9 is a schematic view of an example of measurement circuitry 36 of the HDMI test unit 34. According to this example, TMDS square wave detector 80 comprises four blocks 82, 84, 86 and 88 for testing respectively TMDS data2, TMDS data1, TMDS data 0 and TMDS clock lines. As illustration, only block 82 is detailed in Figure 9, being understood that the structure of blocks 84, 86 and 88 is similar to the structure of block 82.

Block 82 comprises differential lane terminations 90 whose resistance is labelled R_{T} and serial capacitor 92 whose capacitance is labelled C. The combination of circuitry R_{T} and C form a high pass filter enabling to remove DC voltage in the TDMS line tested. Block 82 further comprises signal detectors 94 enabling TMDS lines to be tested independently. Such test may be carried out in single ended mode, signal detectors 94 thus providing a signal detector output labelled "Signal_toggling". Such output provides the status of the signal in a binary coding. For instance, '1' may correspond to a signal carrier detected whereas '0' may be related to an absence of signal. Other method may be used for the signal detection carried out by signal detectors 94. Indeed, signal envelop detection, signal RMS voltage range check, signal edges detection or signal peak detection plus a front end also enable to provide binary information representative of the presence of a signal.

TMDS square wave detector 80 also comprises a "AND" gate 96, its inputs being the output of each block 82, 84, 86 and 88. This means that the signal emitted by the "AND" gate 96 is equal to '1' only when every TDMS lane is emitting a signal '1'. In this case, only one single output status is thus emitted for all TDMS lanes. However, this is not mandatory and the TDMS square wave detector 80 may provide one status by TDMS line. In the case of Figure 9, this would imply four signal status. This requires a most complex architecture but, the information is richer since it indicates which TMDS line is OK or not.

TMDS square wave detector 80 as presented on Figure 9 is thus able to detect any TMDS test pattern from HDMI transmitter 12.

However, in case TMDS pattern clock frequency is low, TMDS square wave detector 80 of Figure 9 is not the most appropriate. TMDS square wave detector 80 of Figure 10 exhibits better performance for this case. Figure 10 is a schematic view of another example of TMDS square wave detector 80 of HDMI test unit 34. The improvement on the detection when comparing the performance of the detector 82 of Figure 10 and the detector 2251 of Figure 8 relies on the presence of a dedicated low pass filter circuitry 98 in the TMDS square wave detector 80 which apply on TMDS shields.

According to the example of Figure 10, low pass filter circuitry 98 comprises a resistor 100 whose resistance is labelled "R_{F}" and a capacitor 102 whose capacitance is labelled "C_{F}". The value of R_{F} should be relatively high **(for instance, equal to XX ohms please complete)** whereas the value of the conductance is preferably tuned according to impedance track of TMDS lanes. This enables to test TMDS lines shield connexion even in case the GROUND connexion of HDMI connector of the device to be tested 10 is not working properly. Indeed, when a connexion appears on HDMI connector 28, the output signals labelled Data_shield_K0 or clock_shield_KO become high. Thus, those signals which are connected to processor 64 provide status on TMDS shield state. In case TMDS shield lines are OK, the capacitor allows keeping impedance line of TMDS track.

Furthermore, low pass filter circuitry 98 may comprise an inductor 103 whose inductance is L_{F}. The role of this inductor 103 is to reject TMDS signal disturbance to processor 64.

According to the example of Figure 8, in addition to TMDS square wave detector 80, measurement circuitry 36 of HDMI test unit 34 further comprises a CEC square wave detector 104. CEC square wave detector 104 enables to detect the presence of a signal or of a carrier on CEC lane transmitted by HDMI transmitter 12. Such CEC square wave detector 104 may comprise a signal detector 106. This detector 106 is able to provide an output signal labelled Signal_toggling. Such signal may be binary, '1' representing for instance the detection of a carrier and '0' the absence of any signal. Signal detector 106 may use on any method like signal envelop detection, signal RMS voltage range check, signal edge detection, signal peak detection combined with a front end.

Measurement circuitry 36 may also comprise a voltage measurement unit 108. Such unit enables to test that the Vout5V lanes is able to deliver a voltage which in the good voltage range.

Furthermore, according to Figure 9, measurement circuitry 36 comprises a HEAC square wave detector 110. Such detector 110 is meant to detect the signal or the carrier presence of a HEC signal (HDMI Ethernet Channel MLT-3) transmitted by HDMI transmitter.

HEAC square wave detector 110 may have a similar structure to that of TDMS Data 2 square wave detector 82. Indeed, the HEAC square wave detector 110 may comprise two signal detectors 116 with a different impedance line termination. In that case, the impedance line termination is a termination resistor 112 whose resistance value is Redt and two capacitors 114 whose capacitance value is C letting the high frequency passing as defined in HDMI specification. Therefore, according to this embodiment, the way HEAC square wave detector 110 works is similar to the way TMDS square wave detector 82 works.

In addition, a similar circuitry to the additional circuitry used on Figure 10 may be used for testing HEAC lane shielding in case HEAC interface test pattern frequency is low.

According to another embodiment which is not represented on figures, HDMI transmitter 12 integrates a production test pattern generator to generate dedicated low speed synchronous pattern on TMDS lanes. It allows using low cost measurement circuitry 36 to test TMDS lanes.

In addition, HDMI test unit 34 comprises a programmable switch with an open position in which measurement circuitry 36 does not operate and a closed position in which measurement circuitry 36 operates.

Control interface 38 controls the programmable switch. This ensures that HDMI test unit 34 is only controlled by the device to be tested 10 and is passive.

It is also proposed a method of testing the device to be tested 10 by using the system 32. Such method may be carried out as illustrated with the flowchart of Figure 11.

The method according to Figure 11 comprises a step S 160 of plugging HDMI test unit 34 to the device to be tested 10. This plugging step S160 can be achieved by using HDMI cable 40.

The method also comprises a step S162 of sending instructions from tester 44 to the device to be tested 10 to execute a testing sequence. This can be achieved by setting HDMI transmitter 12 in test mode. In such test mode, test patterns are notably generated on TMDS lanes, CEC and Vout5V. This can be fully managed by embedded software in the device to be tested 10.

The method may further comprise the step S164 of generating a test pattern on at least one output of the device to be tested 10.

According to the example of Figure 11, the method further comprises a step S 166 of sending a command signal from the device to be tested 10 to HDMI test unit 34, the command signal corresponding to an instruction to begin the measurement. For instance, such step S166 may be achieved by sending a command in the I2C language from HDMI transmitter 12 to control interface 38 to start measurement.

The method may further comprise the step S168 of measuring the test pattern at HDMI test unit 34. Upon receiving command of control interface 34, the measurement may for instance be performed by testing HDMI interface 34.

According to the example of Figure 11, the method further comprises a step S 170 of comparing the measured value with expected value at the device to be tested 10. Such comparing step may be achieved in the integrated multimedia processor 24 of the device 10 which notably comprises the HDMI transmitter 12 and a processor 64.

The method may also encompass a step S172 of sending a Pass or Fail information from the device to be tested 10 to tester 44 according to the result of the comparing step S 170. Indeed, a pass or fail information is an easy information to deal with and is representative of an acceptance criteria for the status of the device to be tested 10. In other words, a Pass information means that the device to be tested 10 operates properly whereas a Fail information results from the fact the device to be tested 10 has a problem.

It appears that the method according to the flowchart of Figure 11 enables to benefit from the advantages provided by the use of system 32. This means that the method according to the flowchart of Figure 11 is faster than the method according the flowchart of Figure 7 without loosing in reliability of the test or making the set up for the test more complex.

The invention has been described with reference to preferred embodiments. However, many variations are possible within the scope of the invention.

### APPENDICE I : TABLE OF ACRONYMS

| **ACRONYMS** | **MEANING** |
|---|---|
| BIST | Built-in self test |
| CEC | Consumer Electronics Control |
| DDC | Display Data Channel |
| DUT | Device Under Test/ Device to be tested |
| EDID | Extended Display Identification Data |
| E-EDID | Enhanced Extended Display Identification Data |
| EPROM | Erasable Programmable Read-Only Memory |
| EEPROM | Electrically Erasable Programmable Read-Only Memory |
| HEAC | HDMI Ethernet and Audio Return Channel |
| HEC | HDMI Ethernet Channel |
| HDMI | High Definition Multimedia Interface |
| HPD | Hot Plug Detect |
| IC | Integrated Circuit |
| RF | radiofrequency |
| TMDS | Transition Minimized Differential Signalling |
| VESA | Video Electronics Standards Association |

## Claims

1. A system (32) for testing a device comprising a HDMI transmitter delivering out output signals and being able to operate in a test mode, the system (32) comprising:
- an HDMI test unit (34) different from the device to be tested which is able to carry out measurements on the output signals of the device to be tested and has a controller interface (38) controlling the measurements, the controller interface (38) being adapted to be controlled by the device when the device operates in test mode.

2. The system according to claim 1, wherein the system (32) further comprise a HDMI cable (40), the HDMI cable (40) ensuring a HDMI link between the device to be tested and the HDMI test unit (34).

3. The system according to any one of claim 1 or claim 2, wherein the HDMI test unit (36) further comprises a man machine interface able to launch the test and display the results of the test.

4. The system according o any one of claim 1 or claim 2, wherein the system (32) further comprises a tester (44) for commanding the device to be tested.

5. The system according to claim 4, wherein the tester (44) and the device to be tested are connected by an UART link or a USB link, the tester (44) being adapted to send instructions to the device to be tested to execute a testing sequence.

6. The system according to any one of claim 4 or claim 5, the tester (16) is adapted to test that the device is able to deliver signals.

7. The system according to claim 6, wherein the device to be tested is able to deliver a signal chosen in the group consisting of:
- Transition Minimized Differential Signaling (TMDS) data and clock lanes,
- TMDS data and clock shields,
- Consumer Electronics Control (CEC),
- Display Data Channel (DDC),
- Hot Plug Detect (HPD).

8. The system according to any one of claim 4 to claim 7, wherein the device to be tested is able to deliver signals exhibiting known values for at least one electrical property, the tester (16) is adapted to check the conformity between the measured values for the electrical property of the signals delivered by the device to be tested with the known values.

9. The system according to any one of claim 1 to claim 8, wherein the HDMI test unit (34) is adapted to carry out measurement in an independent way.

10. The system according to any one of claim 1 to claim 9, wherein the HDMI test unit (34) is a passive unit.

11. The system according to any one of claim 1 to claim 10, wherein the control interface (38) is adapted to receive control instructions from the device to be tested in the I2C protocol.

12. A method of testing a device comprising a HDMI transmitter delivering out output signals and being able to operate in a test mode by using a HDMI test unit (12) of a system (32) for testing such device, the system (32) comprising the HDMI test unit (34) which is different from the device to be tested and is able to carry out measurements on the output signals of the device to be tested and has a controller interface (38) controlling the measurements, the controller interface (38) being adapted to be controlled by the device when the device operates in test mode.

13. The method of testing according to claim 12, wherein the HDMI test unit (34) is the HDMI test unit of a system (32) according to any one of claims 2 to 11.

14. The method of testing according to claim 12 or claim 13, wherein the method comprises the steps of:
- plugging the HDMI test unit (34) to the device to be tested,
- receiving at the HDMI test unit (34) a command signal from the device to be tested, the command signal corresponding to an instruction to begin the test.

15. The method of testing according to claim 14, wherein the method further comprises the steps of:
- measuring a test pattern at the HDMI test unit (34), the test pattern being received from on at least one output of the DUT,
- sending the measured value to the DUT.
